# EUROPEAN PATENT APPLICATION

(11) **EP 2 685 087 A1**
(43) Date of publication of application: **15.01.2014**
(21) Application number: 12176228.0
(22) Date of filing: 12.07.2012
(51) Int. Cl.: F03B 7/00, F03G 7/10

(54) **Power auxiliary device**

(71) Applicant: Chou, Shih-Hang, Nantou County (TW); Wang, Jyun-Sih, New Taipei City (TW)
(72) Inventor: Chou, Shih-Hang, Nantou County (TW); Wang, Jyun-Sih, New Taipei City (TW)
(74) Representative: Lang, Christian

(57) **Abstract**

The present invention discloses a power auxiliary device which includes a rotor having a pivot connected with a power device. The rotor has multiple slots and each slot receives a certain amount of liquid therein and the liquid freely flows in the slot. When the rotor rotates, the liquid flows in the slots and generates inertia and torque differences to assist rotor to rotate.

## Description

### FIELD OF THE INVENTION

The present invention relates to a power auxiliary device, and more particularly, to a rotor having multiple closed slots and each slot has liquid received therein which flows to generate inertia and torque differences to assist rotation.

### BACKGROUND OF THE INVENTION

Along with the highly industrial development, limited petroleum sources become a serious problem worldwide, many scientists develop alternative power sources such as wind power and solar power. The solar power and the wind power can be transformed into electric energy, however, the efficiency for the transformation from the two natural sources into electric energy is low.

Furthermore, some scientists focus on the development and research to the permanent energy and post energy. The permanent energy has no obvious progress and the post energy using initial energy to rotate an object to save energy is still in the initial step.

The present invention intends to provide an auxiliary device which supports the rotor rotating by the fluid flowing in the slots of the device.

### SUMMARY OF THE INVENTION

The present invention relates to a power auxiliary device and comprises a rotor having a pivot which is connected with a power device. The rotor has multiple slots which are arranged along at least one circle with equal angular distance. Each slot has a certain amount of liquid therein and the liquid freely flows in the slot. When the rotor rotates, the liquid flows in the slots and generates inertia and torque differences to assist the rotor to rotate.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the power auxiliary device of the present invention;
Fig. 2 is a perspective view to show the power auxiliary device of the present invention;
Fig. 3 is a cross sectional view to show the first embodiment of the power auxiliary device of the present invention;
Fig. 4 is a cross sectional view to show the second embodiment of the power auxiliary device of the present invention;
Fig. 5 is a cross sectional view to show the third embodiment of the power auxiliary device of the present invention;
Fig. 6 shows that the power auxiliary device of the present invention is connected with a wind turbine;
Fig. 7 is a perspective view to show that the power auxiliary device of the present invention is connected with a wind turbine, and
Fig. 8 is a perspective view to show that the power auxiliary device of the present invention is connected with a generator.

### DETAILED DESCRIPTION OF THE PREFERRED EMBODIMENT

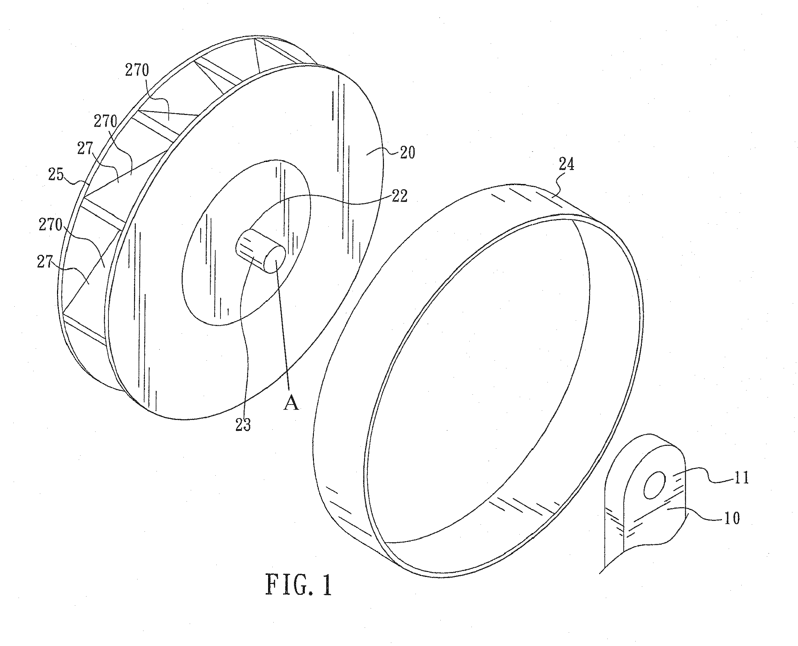

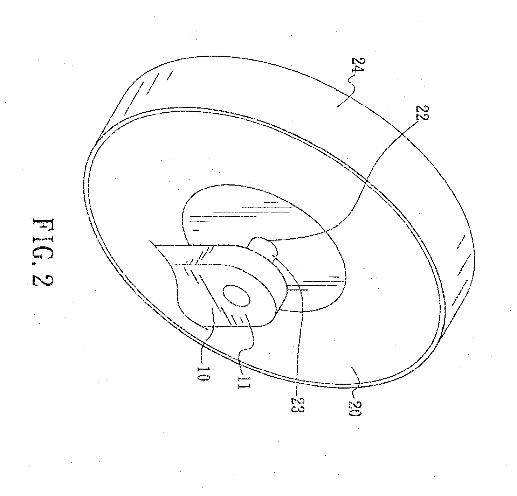

Referring to Figs. 1 and 3-7, the power auxiliary device of the present invention comprises a rotor 20 having a pivot 23 extending from the axis "A" on the first side thereof and the pivot 23 is connected with a power device 30 by a positioning member 10. The rotor 20 has multiple slots 27 which are arranged along a circle "C" with equal angular distance and about the axis "A" of the rotor 20. Each slot 27 has a first end 271, a second end 272 and a straight section 273. The distance between the first end 271 and the axis "A" of the rotor 20 is shorter than that between the second end 272 and the axis "A" of the rotor 20. The straight section 273 extends from the first end 271 of the slot 27 and toward the second end 272 of the slot 27. The straight section 273 is tangent to the circle C. Each slot 27 has a certain amount of liquid 28 therein and the liquid 28 freely flows in the slot 27. The liquid of each of the slots 27 is the same amount and occupies about 10% to 60% of the volume of the slot 27. The slot 27 is not fully filled by the liquid 28 so that the liquid 28 flows in the slot 27. In the embodiment, there are even numbers of the slots 27 and the slots 27 are tangent to the circle C at different angular positions so that the weight of the liquid 28 in the slots 27 generate difference of torque. As shown in Figs. 1, 2 and 9, a collar 24 is mounted to the rotor 20 and fixed to the disks 25 of the rotor 20. Each slot 27 is defined in a case 270 which is fixed to the disks 25 and the collar 24. The positioning member 10 has a lug 11 which has a bearing through which the pivot 23 extends.

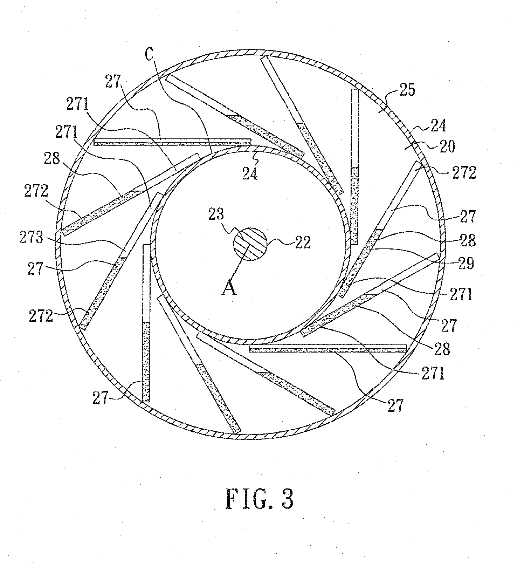

As shown in Fig. 3, the weight of the liquid 28 in the slot 27 applies a force to the rotor 20 and when the liquid 28 of some of the slots 27 flows from the first end 271 toward the second end 272, the arm of the torque increases, so that a first torque is generated when the rotor 20 rotates counter clockwise. In the meanwhile, the liquid 28 in the rest of the slots 27 flows toward the first end 271 to shorten the arm of the torque relative to the rotor 20, a second torque is generated when the rotor 20 rotates clockwise. As shown in Fig. 3, the rotor 20 rotates counter clockwise, the first torque is larger than the second torque so that the rotor 20 keeps rotating counter clockwise. For instance, the first slot 27 is located at the twelve-clock position, and the seventh slot 27 is located at the six-clock position, the first and the seventh slots 27 are reversibly symmetrical to the axis "A". The two respective torques generated by the liquid in the first and the seventh slots 27 are balanced. The second and eighth slots 27 reversibly symmetrical to the axis "A", the liquid 28 in the second slot 27 flows toward the second end 272 and the liquid 28 in the eighth slot 27 flows toward the first end 271. The torque that is generated by the weight of the liquid 28 in the second slot 27 is larger than that of the eighth slot 27. Accordingly, all of the liquid 28 in all of the slots 27 generates a difference of torque applied to the rotor 20 to support rotation of the rotor 20.

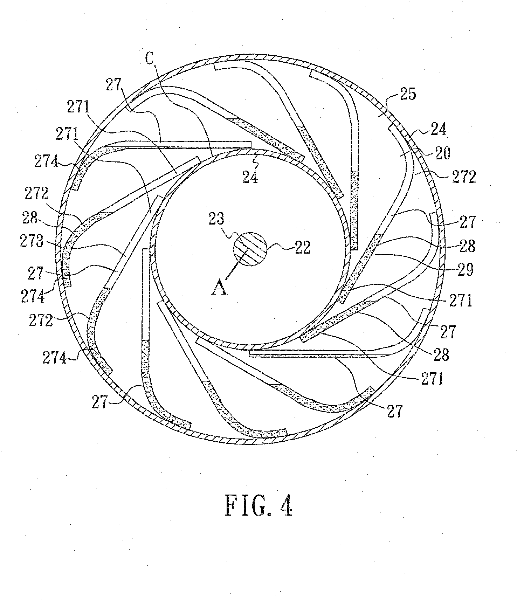

Fig. 4 shows the second embodiment, each of the straight sections 273 has a bent section 274 which extends from a distal end thereof and toward the circle C. Each of the slots 27 is an elongate slot. In order to make the specific weight of the liquid 28 be higher than water, the liquid 28 in each of the slots 27 can be sea water or mercury. Alternatively, particles 29 (metallic particles, glass particles or metallic balls) are added into the liquid 28.

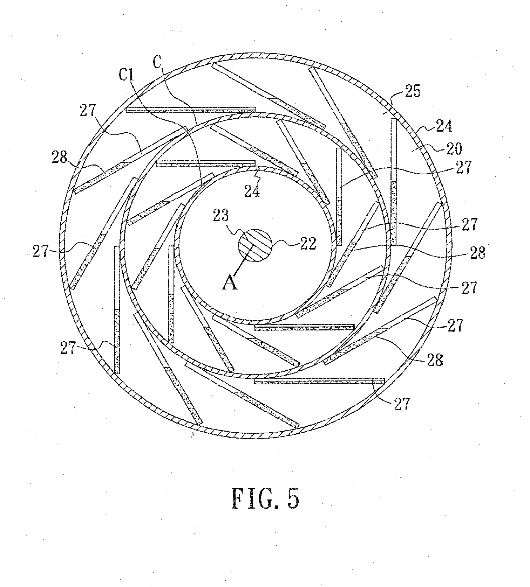

Fig. 5 shows the third embodiment, there are multiple circles C, Cl in the rotor 20 which share a common center, the axis "A". Each circle C/C1 has multiple slots 27 which are arranged along the circle "C/C1" with equal angular distance and about the axis "A" of the rotor 20. Multiple collars 24 are connected to the rotor 20 and located about the axis "A". Each collar 24 has multiple slots 27 so that the rotor 20 has more slots 27 to generate larger difference of torque to keep the rotor 20 rotating.

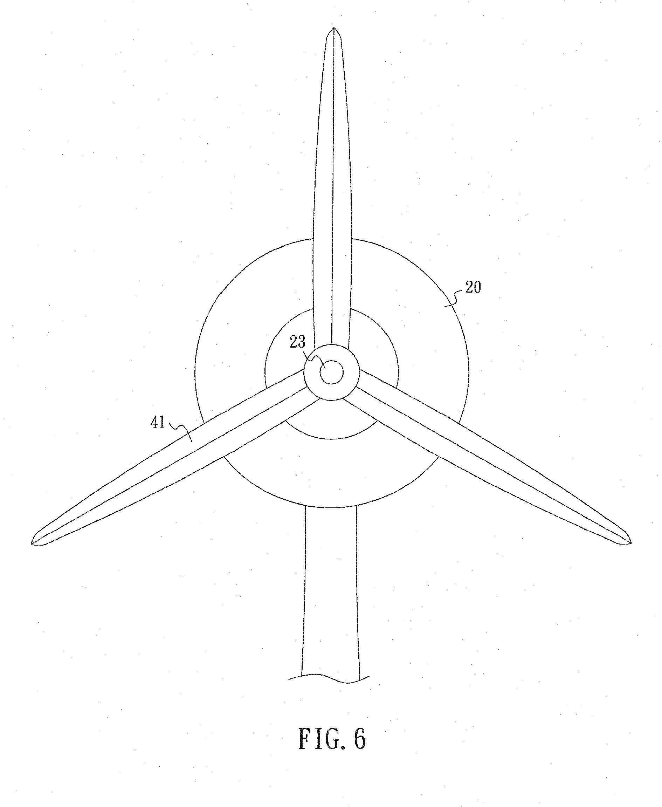

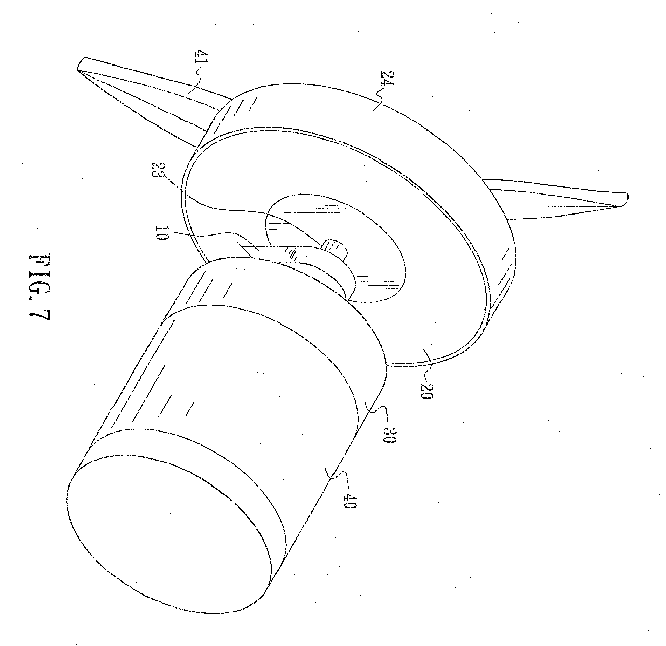

As shown in Figs. 6 and 7, the auxiliary device is cooperated with a wind turbine, wherein a blade unit 41 is connected with the pivot 23 and the other end of the pivot 23 is connected with a power device 30. When the blade unit 41 rotates by wind, the generator 50 connected with the pivot 23 and the blade unit 41 is activated and generates electric power. The liquid 28 in the slots 27 generates difference of torque to keep the rotor 20 rotating so that the blade unit 41 rotates at higher speed to increase the efficiency of the generator 50. When the wind is weak, the liquid 28 in the slots 27 generates difference of torque to keep the rotor 20 rotating, so that the generator 50 is activated and generates electric power.

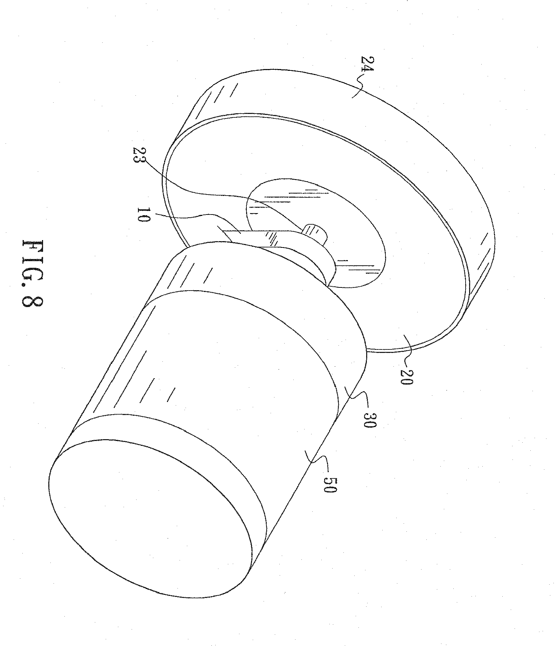

As shown in Fig. 8, the auxiliary device is cooperated with a generator 50 and the pivot 23 is connected with the input end of the power source of the generator 50, the rotation of the rotor 20 drives the generator 50 to generate electric power via the power source 30.

While we have shown and described the embodiment in accordance with the present invention, it should be clear to those skilled in the art that further embodiments may be made without departing from the scope of the present invention.

## Claims

1. A power auxiliary device comprising:
a rotor having a pivot extending from a first side thereof, and the pivot being connected with a power device,
wherein the rotor having multiple slots which are arranged along at least one circle with equal angular distance and about an axis of the rotor, each slot having a first end and a second end, a distance between the first end and the axis of the rotor being shorter than that between the second end and the axis of the rotor, each slot having a certain amount of liquid therein and the liquid freely flowing in the slot.

2. The power auxiliary device as claimed in claim 1, wherein each of the slots has a straight section which extends from the first end of the slot and toward the second end of the slot, the straight section is tangent to the at least one circle.

3. The power auxiliary device as claimed in claim 2, wherein each of the straight sections has a bent section which extends from a distal end of the straight section and toward the at least one circle.

4. The power auxiliary device as claimed in claim 1, wherein there are even numbers of the slots.

5. The power auxiliary device as claimed in claim 1, wherein the liquid in each of the slots has particles received therein so as to increase specific weight of the liquid.

6. The power auxiliary device as claimed in claim 1, wherein there are multiple circles which commonly share the axis of the rotor and each circle has multiple slots.
